# EUROPEAN PATENT SPECIFICATION

(11) **EP 3 591 485 B1**
(45) Date of publication and mention of the grant of the patent: **25.08.2021**
(21) Application number: 18901807.0
(22) Date of filing: 14.06.2018
(51) Int. Cl.: G05B 23/02, G06F 11/07, G06F 11/30, G06F 11/34

(54) **METHOD AND DEVICE FOR MONITORING FOR EQUIPMENT FAILURE**
VERFAHREN UND EINRICHTUNG ZUR ÜBERWACHUNG VON VORRICHTUNGSAUSFALL
PROCÉDÉ ET DISPOSITIF DE SURVEILLANCE DE LA DÉFAILLANCE D'UN ÉQUIPEMENT

(30) Priority: 08.05.2018 CN 201810433735
(43) Date of publication of application: 08.01.2020
(73) Proprietor: Wangsu Science & Technology Co., Ltd., Shanghai 200030 (CN)
(72) Inventor: CHEN, Tao, Shanghai 200030 (CN); LIN, Feng, Shanghai 200030 (CN)
(74) Representative: de Arpe Fernandez, Manuel
(86) International application number: PCT/CN2018/091208
(87) International publication number: WO 2019/214010

(56) References cited:
- EP-B1- 1 733 506
- CN-A- 102 546 266
- CN-A- 104 378 246
- CN-A- 105 306 272
- CN-A- 105 320 585
- CN-A- 105 323 111
- CN-A- 107 104 838
- CN-A- 107 846 314
- US-B2- 9 026 646

## Description

### FIELD OF THE DISCLOSURE

The present disclosure relates to the field of computer technology and, more particularly, relates to a method and an apparatus for monitoring device failure.

### BACKGROUND

During the operation of a device, there are often operation failures due to hardware or software problems, which may reduce the processing ability of the device, cause execution logic errors, and even result in device shutdown, component damage, etc. In order to find out and solve the operation failures of the device as soon as possible, users can often check the performance indicators of the device through a performance monitoring program (which can be called a monitoring tool) to understand the operation status of the device.

Most of the existing monitoring tools are system programs that come with the device, e.g., "mpstat" for CPU, "iostat" for IO, "top" for processes, etc. Through these monitoring tools, the performance indicators of the device can be detected. Once the device fails, the corresponding performance indicators will be abnormal. As such, the user can view the performance indicators detected by the monitoring tools described above, and then though analyses based on the performance indicators and related operating parameters to obtain a general knowledge of the failure, and even accurately determine the cause, location, time, etc. of the failure. Further, the user can also specifically provide solutions for failure based on the above performance indicators.

In the process of implementing the present disclosure, the inventors have found that the existing technology has at least the following problems.

The types and the number of monitoring tools available for a target are very large, and the functional overlap between some monitoring tools is also high, such that for a certain operation failure of the device, the user often detects the same or different performance indicators through a large number of monitoring tools, which may not only waste a lot of time and effort of the user, but also consume a large amount of device processing resources for performance monitoring.

The document CN104378246 A discloses a network equipment fault positioning system, method and device. The system comprises a detecting module, a communication module, an information collecting module and an information judging module, wherein the detecting module is used for monitoring the fault generating information of to-be-detected equipment connected with the detecting module and transmitting a triggering instruction to the information collecting module when the fault of the to-be-detected equipment is detected.

The document CN102546266 A discloses a method for diagnosing network failures. The method comprises the following steps that: after a network fails, an automatic remote diagnostic platform operates a preset failure script corresponding to the failure, and the failure script acquires the information of network equipment directly related to the failure by transmitting an interactive diagnostic command to the network equipment related to the failure; and the failure script compares acquired information of network equipment directly related to the failure to obtain a diagnostic result of the failure.

The document CN107846314 A discloses an intelligent operation and maintenance management system. The intelligent operation and maintenance management system comprises a system monitoring module, a fault information recognition module, a fault repair module and a fault repair evaluation module; the system monitoring module is used for monitoring the running state of the system, and the system monitoring module transfers the current state parameters and the monitored abnormal conditions to the fault information collection module when monitoring abnormality.

The document CN105320585 A discloses a method and device for achieving application fault diagnosis. The method comprises the steps that multi-dimensional application data are collected.

The document US9026646 B discloses methods, systems, and articles associated with correlating detected changes within a computer network with remediation processes performed in response to policy test failures.

### BRIEF SUMMARY OF THE DISCLOSURE

In order to solve the problems in the existing technology, embodiments of the present disclosure provide a method and an apparatus for monitoring device failure. The invention is defined in the appended independent claims, whereas preferred embodiments of the invention are defined in the appended dependent claims.

The beneficial effects brought by the technical solutions provided by the embodiments of the present disclosure include the following.

In the embodiments of the present disclosure, a tool collection script that integrates a plurality of monitoring tools is loaded and executed, and a plurality of preset key indicators are periodically monitored through a plurality of preset basic indicators included in the tool collection script; when a target preset key indicator is abnormal, device operating parameters are collected through a plurality of data collection tools that corresponds to the target preset key indicator and is included in the tool collection script; and the failure type to which the device operating parameters belong is determined and fed back based on the parameter characteristics corresponding to preset failure types. As such, through the monitoring tools in the tool collection script, the operation status of the device may be monitored in a unified and automatic manner. When the device fails, the failure type can be fed back more quickly and accurately based on the execution logic of the tool collection script, such that excessive participation of the user may not be necessary, and the consumed device processing resources may be low.

### BRIEF DESCRIPTION OF THE DRAWINGS

In order to more clearly illustrate the technical solutions of the embodiments of the present disclosure, the drawings used for illustrating the embodiments will be briefly described below. It should be understood that the following drawings merely illustrate some embodiments of the present disclosure. For those of ordinary skill in the art, other drawings can be obtained according to these drawings without any creative work.
FIG. 1 illustrates a flowchart of a method for monitoring device failure according to an embodiment of the present disclosure;
FIG. 2 illustrates a schematic flowchart of triggering data collection according to an embodiment of the present disclosure;
FIG. 3 illustrates a schematic flowchart of executing data collection according to an embodiment of the present disclosure;
FIG. 4 illustrates a schematic structural diagram of an apparatus for monitoring device failure according to an embodiment of the present disclosure;
FIG. 5 illustrates a schematic structural diagram of an apparatus for monitoring device failure according to an embodiment of the present disclosure;
FIG. 6 illustrates a schematic structural diagram of a device according to an embodiment of the present disclosure.

### DETAILED DESCRIPTION

In order to make the objects, technical solutions and advantages of the present disclosure clearer, the embodiments of the present disclosure will be further described in detail below with reference to the accompanying drawings.

The embodiments of the present disclosure provide a method for monitoring device failure. The executive entity of the method may be any device that has a program-execution function, and may be a server or a terminal. The device may include a processor, a memory, and a transceiver. The processor may be configured to perform the process for monitoring device failure in the following procedures. The memory may be configured to store data required and generated during processing, e.g., to store tool collection scripts, to record device operating parameters, etc. The transceiver may be configured to receive and send relevant data during processing, e.g., to receive instructions inputted by the user, to feed back monitoring results of device failures, etc. The device can support multiple processes to be executed simultaneously. When the process runs, it may occupy different processing resources of the device CPU, use a certain memory space, and generate disk I/O.

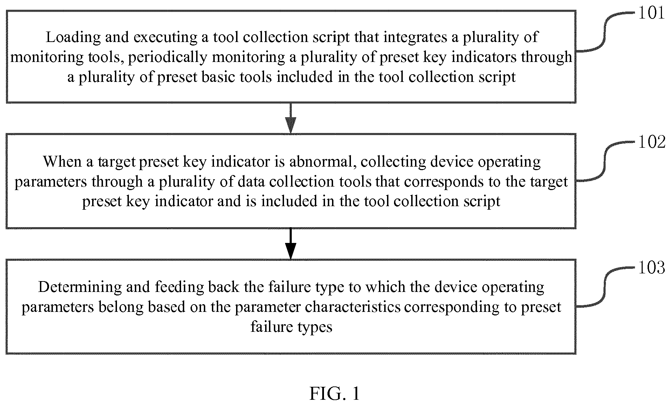

The processing flow shown in FIG. 1 will be described in detail below with reference to specific embodiments, and the content may include the following steps.

In step 101, a tool collection script that integrates a plurality of monitoring tools may be loaded and executed, a plurality of preset key indicators may be periodically monitored through a plurality of preset basic tools included in the tool collection script.

In one embodiment, a tool collection script that integrates a plurality of monitoring tools can be developed. The tool collection script may be able to monitor the operation status of the device from different angles using different monitoring tools, such that hardware or software failures generated during the operation of the device can be discovered in time. Specifically, after the tool collection script is installed on the device, the device can load and run the tool collection script, and periodically monitor a plurality of preset key indicators through a plurality of preset basic tools included in the tool collection script. Here, the plurality of preset key indicators may be preset. Through the plurality of preset key indicators, whether any failure occurs on the device may be determined in a relatively simple and timely manner, and for each preset key indicator, real-time monitoring can be implemented through a small number of preset basic tools capable of indicating whether the preset key indicator contains abnormal information. As such, a small number of basic tools may be operated to monitor the key indicators, the consumed device processing resources may be less, and the impact on the device performance may be relatively small.

Optionally, the plurality of preset key indicators described above may include one or more of a CPU usage rate, a memory usage rate, a load value, an I/O waiting duration, and a CPU usage of each process. It can be understood that, in other embodiments, the preset key indicators are not limited to the foregoing enumerated ones.

In one embodiment, five indicators of the CPU usage, the memory usage, the load value, the I/O wait time, and the CPU usage of each process may be selected as preset key indicators. In a corresponding manner, for the CPU usage, detection may be performed using a "mpstat" tool, the detection method may include performing detection once per cycle, and the detection duration may be 1 second; for the memory usage, the detection may be implemented by examining the fields of "used" and "free" in "free-m", and the detection method may include performing detection once per cycle; for the load value, the detection may be implemented by examining the load field of the "/proc/load avg" file within 1 minute, and the detection method may include performing detection once per cycle; for the I/O waiting time, detection may be performed using the "mpstat" tool, the detection method may include performing detection once per cycle, and the detection duration may be 1 second; for the CPU usage of each process, detection may be performed a "top" tool, the detection method may include performing detection once per cycle, and the detection duration may be 1 second.

In step 102, when a target preset key indicator is abnormal, device operating parameters may be collected through a plurality of data collection tools that corresponds to the target preset key indicator and is included in the tool collection script.

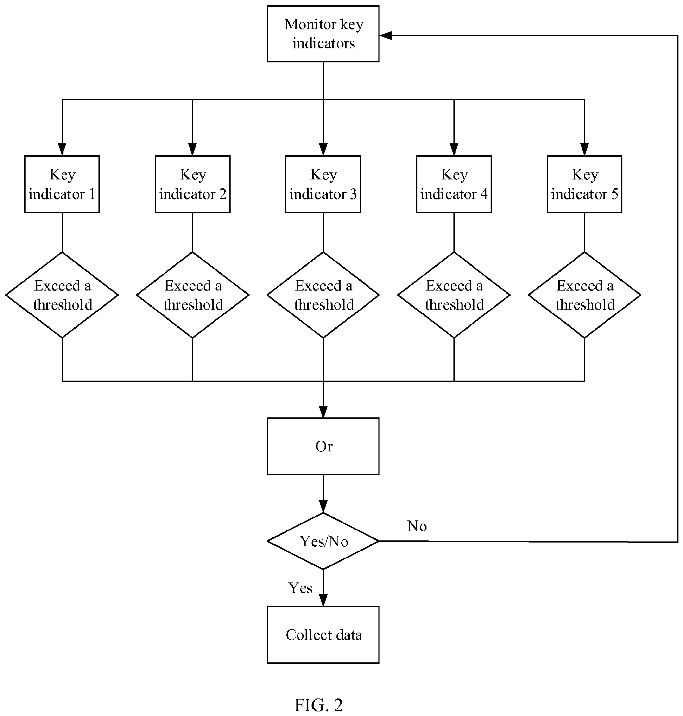

In one embodiment, when the device monitors the preset key indicators through the preset basic tools in the tool collection script, using a threshold determination method, the device may perform detection according to some empirical data used in daily analyses to determine whether the monitored preset key indicators are abnormal. Therefore, whether it is necessary to trigger a subsequent data collection process can be determined, and the specific processing is shown in FIG. 2. When a certain preset key indicator (such as a target preset key indicator) is found to be abnormal, the device may first determine a plurality of data collection tools that corresponds to the target preset key indicator and is included in the tool collection script, and then collect device operating parameters through the plurality of the data collection tools. It should be understood that for different preset key indicators, data collection tools under the abnormal conditions are preset, and the device operating parameters related to the abnormal preset key indicators are collected based on the data collection tools. Here, on the one hand, the monitoring of the preset key indicators and the determination of the monitoring results may both take a short time, and when a preset key indicator is abnormal, the time from the discovery of the abnormality to the collection of the operating parameters of the device may be relatively short, and the possibility for the abnormal problem to disappear or change may be low; on the other hand, when the preset key indicators are normal, no processing may be performed, and a large amount of invalid data collection processing may be avoided.

Optionally, the device operating parameters may be collected by configuring the data collection threads. Correspondingly, the processing of step 102 may be as follows: when at least one target preset key indicator is abnormal, for each target preset key indicator, the data collection threads of the plurality of data collection tools included in the tool collection scrip may be configured correspondingly; the duplicate data collection threads in all data collection threads may be eliminated; the daemon threads of all data collection threads may be configured; and all data collection threads may be performed to collect the device operating parameters.

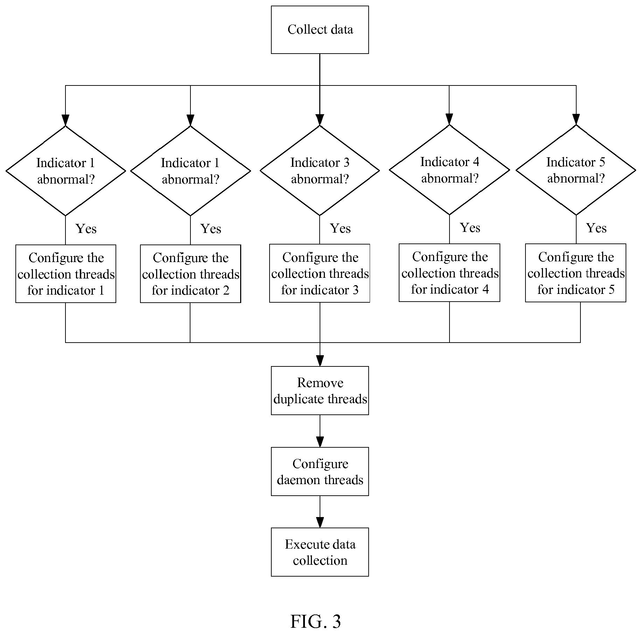

In one embodiment, when detecting that at least one target preset key indicator is abnormal, for each target preset key indicator, the device may first determine a plurality of data collection tools that corresponds to the target preset key indicator and is included in the tool collection script, and then configure the data collection threads corresponding to the data collection tools. Further, the device may be able to remove the duplicate data collection threads from all configured data collection threads. Further, the device can also configure the daemon threads for all data collection threads to ensure that only when all the data collection threads are executed, and all the required device operating parameters are collected, a subsequent process may then be performed. In turn, the device may be able to execute all the data collection threads to collect device operating parameters. The above implementation process can refer to FIG. 3.

Optionally, in order to alleviate the pressure on the CPU and the memory of the device during the data collection process, and ensure the consistency of the collected operating parameters of the device, the data collection threads may be divided into synchronous collection threads and asynchronous collection threads. The corresponding processing may be as follows: according to the synchronization requirements of each data collection tool, all the data collection threads may be divided into synchronous collection threads and asynchronous collection threads; all the synchronous collection threads may be simultaneously executed in a multi-thread manner, and the collected device operating parameters may be stored into a multi-threaded storage queue with read-write locks; after the execution of the synchronous collection threads ends, the asynchronous collection threads may be sequentially executed.

In one embodiment, different data collection tools may have different synchronization requirements for startup time. For example, tools such as "mpstat", "top", etc. may have relatively high synchronization requirements, while tools such as "load", etc. may have relatively low synchronization requirements. Therefore, in the process of executing all the data collection threads to collect the device operating parameters, the device may first divide all the data collection threads into synchronous collection threads and asynchronous collection threads according to the synchronization requirements of each data collection tool, and then simultaneously execute all the synchronous collection threads in a multi-thread manner, and use a multi-threaded storage queue with read-write locks to store the data collection results. As such, confusion in the collected device operating parameters may be avoided. After the execution of the synchronous collection threads ends, the device may sequentially execute the asynchronous collections threads.

In step 103, based on the parameter characteristics corresponding to preset failure types, the failure type to which the device operating parameters belong may be determined and fed back.

In one embodiment, those skilled in the art can predict various failures that may occur in the device, and record the parameter characteristics of the device operating parameters when each failure occurs in the device, and then the parameter characteristics and the corresponding failure type can be written into the source code of the tool collection script. After loading and executing the tool collection script, the device can read the data content of the above parameter characteristics and failure type. As such, after the device operating parameters are collected, the device can determine the failure type to which the device operating parameters belong based on the parameter characteristics corresponding to the preset failure types. In addition, the device may feed back the failure type to the user of the device. Specifically, the feedback method may include directly displaying the failure type on the screen of the device, or writing the failure type into the operation log of the device, or sending the failure type to the user's default mailbox by email.

Optionally, before determining the failure type to which the device operating parameters belong, the device operating parameters may be validated first, and correspondingly, the processing of step 103 may be as follows: when the device operating parameters match with the states of the plurality of preset key indicators, based on the parameter characteristics corresponding to the preset failure types, the failure type to which the device operating parameters belong may be determined and fed back.

In one embodiment, after the device operating parameters are collected, the device may re-verify whether the device operating parameters are consistent with the states of the plurality of preset key indicators detected in step 102, that is, based on the device operating parameters, determine whether the target preset key indicators are abnormal, and whether the preset key indicators other than the target preset key indicators are normal. When the states do not match, the device operating parameters of the current collection may be discarded, and the next trigger of step 102 is awaited. When the states are consistent, the failure type to which the device operating parameters belong may be determined and fed back based on the parameter characteristics corresponding to the preset failure type.

Optionally, when determining the failure type of the device, the device operating parameters may be compared with all failure types in a one by one manner. Correspondingly, the processing of step 103 may be as follows: the parameter type and the corresponding parameter characteristics required for each failure type in a pre-stored failure type library may be determined in a one by one manner; the device operating parameters in the parameter type may be arranged, and whether the arranged device operating parameters are in consistent with the parameter characteristics may be verified; when consistency is verified, the current failure type may be confirmed and fed back, otherwise the next failure type may be verified.

In one embodiment, after loading the tool collection script, the device can maintain a failure type library, and the failure type library can summarize all the possible device failures and the parameter characteristics of the device operating parameters when the failures take place. Furthermore, after the device operating parameters are collected, the parameter type and corresponding parameter characteristics required for each failure type in the failure type library may be determined in a one by one manner, and then the collected device operating parameters may be arranged, and the device operating parameters in the corresponding parameter type may be summarized. After that, whether the arranged device operating parameters are in consistent with the parameter characteristics corresponding to the current failure type can be verified. When consistency is verified, the current failure type can be confirmed and fed back. Otherwise, the next failure type may be verified, that is, the processes of determining the parameter type and the parameter characteristics, arranging the device operating parameters, and verifying whether the parameter characteristics are met may be re-executed.

Optionally, for the specific configuration of the tool collection script involved in the foregoing process, the user may make any setting according to the actual needs, and the corresponding processing may be as follows: a configuration adjustment instruction inputted by the user for the tool collection script may be received; a script-execution configuration of the tool collection script may be updated according to the configuration adjustment instruction.

In the process, the script-execution configuration may at least include one or more of the following: the type of the monitoring tools and the operating parameters thereof, the preset key indicator and the corresponding preset basic tools and data collection tools, and the parameter characteristics and the feedback method corresponding to the failure type.

In one embodiment, when the device loads and executes the tool collection script, the tool collection script may be executed by default based on the default values in the tool collection script. The default values may be preset by the developer of the tool collection script, and may be suitable for most scenarios where device failures are monitored. The user may be able to adjust the configuration item to change the script-execution configuration, such as the type of the monitoring tools in the tool collection script and the operating parameters, the preset key indicator and the corresponding preset basic tools and data collection tools, the parameter characteristics and the feedback method corresponding to the failure type, etc. Specifically, after the user performs the corresponding configuration adjustment operation, the device may be able to receive the configuration adjustment instruction inputted by the user for the tool collection script, and then update the script-execution configuration of the tool collection script according to the configuration adjustment instruction.

In the embodiments of the present disclosure, a tool collection script that integrates a plurality of monitoring tools may be loaded and executed, and a plurality of preset key indicators may be periodically monitored through a plurality of preset basic indicators included in the tool collection script; when a target preset key indicator is abnormal, the device operating parameters may be collected through a plurality of data collection tools that corresponds to the target preset key indicator and is included in the tool collection script; and the failure type to which the device operation parameters belong is determined and fed back based on the parameter characteristics corresponding to the preset failure types. As such, through the monitoring tools in the tool collection script, the operation status of the device may be monitored in a unified and automatic manner. When the device fails, the failure type can be fed back more quickly and accurately based on the execution logic of the tool collection script, such that excessive participation of the user may not be necessary, and the consumed device processing resources may be low.

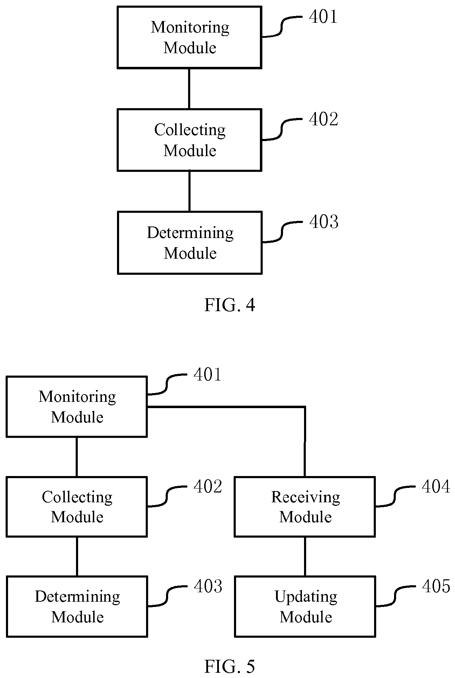

Based on the same technical concept, the embodiments of the present disclosure also provide an apparatus for monitoring device failure. As shown in FIG. 4, the apparatus may include:
a monitoring module 401, configured to load and execute a tool collection script that integrates a plurality of monitoring tools, and periodically monitor a plurality of preset key indicators through a plurality of preset basic tools included in the tool collection script;
a collecting module 402, configured to, when a target preset key indicator is abnormal, collect device operating parameters using a plurality of data collection tools corresponding to the target preset key indicator and included in the tool collection script;
a determining module 403, configured to determine and feed back the failure type to which the device operating parameters belong based on the parameter characteristics corresponding to preset failure types.

Optionally, the plurality of preset key indicators at least includes one or more of a CPU usage rate, a memory usage rate, a load value, an I/O waiting duration, and a CPU usage of each process.

Optionally, the collecting module 402 may be used to:
when at least one target preset key indicator is abnormal, for each of the at least one target preset key indicator, correspondingly configure the data collection threads of the plurality of data collection tools included in the tool collection script;
remove duplicate data collection threads from all data collection threads;
configure the daemon threads of all the data collection threads;
execute all the data collection threads to collect the device operating parameters.

Optionally, the collecting module 402 may be used to:
according to the synchronization requirements of each of the data collection tools, divide all the data collection threads into synchronous collection threads and asynchronous collection threads;
simultaneously execute all the synchronous collection threads in a multi-thread manner, and store the collected device operating parameters into a multi-threaded storage queue with read-write locks;
after the execution of the synchronous collection threads ends, sequentially execute the asynchronous collection threads.

Optionally, the determining module 403 may be specifically used to:
when the device operating parameters match with the states of the plurality of preset key indicators, determine and feed back the failure type to which the device operating parameters belong based on the parameter characteristics corresponding to the preset failure types.

Optionally, the determining module 403 may be specifically used to:
determine the parameter type and the corresponding parameter characteristics required for each failure type in a pre-stored failure type library in a one-by-one manner;
arrange the device operating parameters in the parameter type, and verify whether the arranged device operating parameters are in consistent with the parameter characteristics;
when consistency is verified, confirm and feed back the current failure type, otherwise verify the next failure type.

Optionally, as shown in FIG. 5, the apparatus may also include:
a receiving module 404, configured to receive a configuration adjustment instruction inputted by the user for the tool collection script;
an updating module 405, configured to update a script-execution configuration of the tool collection script according to the configuration adjustment instruction, the script-execution configuration at least including one or more of the following: the type of the monitoring tools and the operating parameters thereof, the preset key indicator and the corresponding preset basic tools and data collection tools, and the parameter characteristics and the feedback method corresponding to the failure type

In the embodiments of the present disclosure, a tool collection script that integrates a plurality of monitoring tools may be loaded and executed, and a plurality of preset key indicators may be periodically monitored through a plurality of preset basic indicators included in the tool collection script; when a target preset key indicator is abnormal, the device operating parameters may be collected through a plurality of data collection tools that corresponds to the target preset key indicator and is included in the tool collection script; and the failure type to which the device operation parameters belong is determined and fed back based on the parameter characteristics corresponding to the preset failure types. As such, through the monitoring tools in the tool collection script, the operation status of the device may be monitored in a unified and automatic manner. When the device fails, the failure type can be fed back more quickly and accurately based on the execution logic of the tool collection script, such that excessive participation of the user may not be necessary, and the consumed device processing resources may be low.

It should be noted that, when monitoring failures of a device, the apparatus for monitoring device failure provided by the embodiments above is merely illustrated based on the division of the functional modules described above. In actual applications, the functions may be allocated to different functional modules for implementation according to the needs. That is, the internal structure of the apparatus may be divided into different functional modules to implement all or part of the functions described above. In addition, the apparatus for monitoring device failure provided by the embodiments above is conceptually the same as the method for monitoring device failure, and the specific implementation process can be referred to the embodiments of the method, and the details are not described herein again.

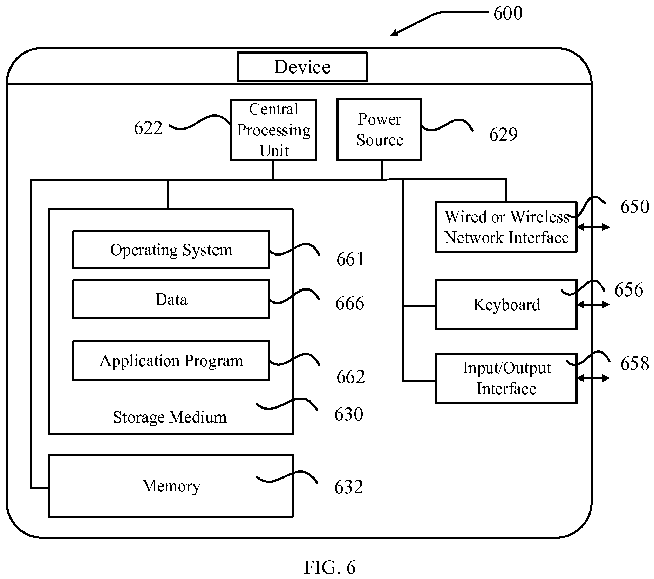

FIG. 6 illustrates a schematic structural diagram of a device according to an embodiment of the present disclosure. The device 600 may vary considerably depending on configuration or performance, and may include one or more central processing units 622 (e.g., one or more processors) and a memory 632, one or more storage media 630 for storing application programs 662 or data 666 (for example, one or one massive storage devices). Among them, the memory 632 and the storage media 630 may be short-term storages or persistent storages. The programs stored on the storage media 630 may include one or more modules (not shown), and each module may include a series of instruction operations of the device. Furthermore, the central processing unit 622 may be configured to communicate with the storage media 630, and on the device 600, execute the series of instruction operations in the storage media 630.

The device 600 may also include one or more power sources 626, one or more wired or wireless network interfaces 650, one or more input/output interfaces 658, one or more keyboards 656, and/or one or more operating systems 661, such as Windows Server™, Mac OS X™, Unix™, Linux™, FreeBSD™, etc.

The device 600 may include a memory, and one or more programs. The one or more programs may be stored in the memory, and may be configured to be executed by one or more processors. The one or more programs may include instructions described above for monitoring device failure.

Those skilled in the art shall understand that the implementation of all or part of the steps of the above embodiments may be completed by hardware, or may be completed by using a program to instruct related hardware. The program may be stored in a computer readable storage medium. The storage medium mentioned above may be a read only memory, a magnetic disk or optical disk, etc.

The above are only the preferred embodiments of the present disclosure, and are not intended to limit the present disclosure.

## Claims

1. A method for monitoring device failure, comprising:
loading and executing (101) a tool collection script that integrates a plurality of monitoring tools, periodically monitoring a plurality of preset key indicators through a plurality of preset basic tools included in the tool collection script, wherein each preset key indicator is real-time monitored through the preset basic tools capable of indicating whether the preset key indicator contains abnormal information;
when a target preset key indicator is abnormal, collecting (102) device operating parameters through a plurality of data collection tools that corresponds to the target preset key indicator and is included in the tool collection script, wherein for different preset key indicators, the data collection tools under the abnormal conditions are preset, and the device operating parameters related to the abnormal preset key indicators are collected based on the data collection tool; and
determining and feeding back (103) a failure type to which the device operating parameters belong based on parameter characteristics corresponding to preset failure types.

2. The method according to claim 1, wherein:
the plurality of preset key indicators at least includes one or more of a CPU usage rate, a memory usage rate, a load value, an I/O waiting duration, and a CPU usage of each process.

3. The method according to claim 1, wherein when the target preset key indicator is abnormal, collecting the device operating parameters through the plurality of data collection tools that corresponds to the target preset key indicator and is included in the tool collection script includes:
when at least one target preset key indicator is abnormal, for each of the at least one target preset key indicator, configuring data collection threads of the plurality of data collection tools that corresponds to the target preset key indicator and is included in the tool collection script;
removing duplicate data collection threads from all data collection threads;
configuring daemon threads of all the data collection threads; and
executing all the data collection threads to collect the device operating parameters.

4. The method according to claim 3, wherein executing all the data collection threads to collect the device operating parameters includes:
according to synchronization requirements of each of the data collection tools, dividing all the data collection threads into synchronous collection threads and asynchronous collection threads;
simultaneously executing all the synchronous collection threads in a multi-thread manner, and storing the collected device operating parameters into a multi-threaded storage queue with read-write locks; and
after execution of the synchronous collection threads ends, sequentially executing the asynchronous collection threads.

5. The method according to claim 1, wherein determining and feeding back the failure type to which the device operating parameters belong based on the parameter characteristics corresponding to the preset failure types includes:
when the device operating parameters match with states of the plurality of preset key indicators, determining and feeding back the failure type to which the device operating parameters belong based on the parameter characteristics corresponding to the preset failure types.

6. The method according to claim 1, wherein determining and feeding back the failure type to which the device operating parameters belong based on the parameter characteristics corresponding to the preset failure types includes:
determining a parameter type and corresponding parameter characteristics required for each failure type in a pre-stored failure type library in a one-by-one manner;
arranging the device operating parameters in the parameter type, and verifying whether the arranged device operating parameters are consistent with the parameter characteristics; and
when consistency is verified, confirming and feeding back a current failure type, otherwise verifying a next failure type.

7. The method according to any of claims 1-6, further including:
receiving a configuration adjustment instruction inputted by a user for the tool collection script; and
updating a script-execution configuration of the tool collection script according to the configuration adjustment instruction, wherein the script-execution configuration at least includes one or more of following: a type of monitoring tools and operating parameters thereof, a preset key indicator and corresponding preset basic tools and data collection tools, and parameter characteristics and a feedback method corresponding to the failure type.

8. An apparatus for monitoring device failure, comprising:
a monitoring module (401), configured to load and execute a tool collection script that integrates a plurality of monitoring tools, and periodically monitor a plurality of preset key indicators through a plurality of preset basic tools included in the tool collection script, wherein each preset key indicator is real-time monitored through the preset basic tools capable of indicating whether the preset key indicator contains abnormal information;
a collecting module (402), configured to, when a target preset key indicator is abnormal, collect device operating parameters through a plurality of data collection tools that corresponds to the target preset key indicator and is included in the tool collection script, wherein for different preset key indicators, the data collection tools under the abnormal conditions are preset, and the device operating parameters related to the abnormal preset key indicators are collected based on the data collection tool; and
a determining module (403), configured to determine and feed back a failure type to which the device operating parameters belong based on parameter characteristics corresponding to preset failure types.

9. The apparatus according to claim 8, wherein:
the plurality of preset key indicators at least includes one or more of a CPU usage rate, a memory usage rate, a load value, an I/O waiting duration, and a CPU usage of each process.

10. The apparatus according to claim 8, wherein the collecting module is used to:
when at least one target preset key indicator is abnormal, for each of the at least one target preset key indicator, configure the data collection threads of the plurality of data collection tools that corresponds to the target preset key indicator and is included in the tool collection script;
remove duplicate data collection threads from all data collection threads;
configure daemon threads of all the data collection threads; and
execute all the data collection threads to collect the device operating parameters.

11. The apparatus according to claim 10, wherein the collecting module is used to:
according to synchronization requirements of each of the data collection tools, divide all the data collection threads into synchronous collection threads and asynchronous collection threads;
simultaneously execute all the synchronous collection threads in a multi-thread manner, and store the collected device operating parameters into a multi-threaded storage queue with read-write locks; and
after execution of the synchronous collection threads ends, sequentially execute the asynchronous collection threads.

12. The apparatus according to claim 8, wherein the determining module is used to:
when the device operating parameters match with states of the plurality of preset key indicators, determine and feed back the failure type to which the device operating parameters belong based on the parameter characteristics corresponding to the preset failure types.

13. The apparatus according to claim 8, wherein the determining module is used to:
determine a parameter type and corresponding parameter characteristics required for each failure type in a pre-stored failure type library in a one-by-one manner;
arrange the device operating parameters in the parameter type, and verify whether the arranged device operating parameters are consistent with the parameter characteristics; and
when consistency is verified, confirm and feed back a current failure type, otherwise verify a next failure type.

14. The apparatus according to any of claims 8-13, further including:
a receiving module (404), configured to receive a configuration adjustment instruction inputted by a user for the tool collection script; and
an updating module (405), configured to update a script-execution configuration of the tool collection script according to the configuration adjustment instruction, wherein the script-execution configuration includes at least one or more of a type of monitoring tools and operating parameters thereof, a preset key indicator and corresponding preset basic tools and data collection tools, and parameter characteristics and a feedback method corresponding to the failure type.

15. A device, comprising a processor (622) and a memory (632), the memory storing at least one instruction, at least one program segment, a set of code, or a set of instructions, wherein the at least one instruction, the at least one program segment, the set of code, or the set of instructions is loaded and executed by the processor to implement the method for monitoring device failure according to any of claims 1-7.

## Patentansprüche

1. Eine Methode für die Überwachung eines Gerätefehlers, die Folgendes umfasst:
Laden und Ablauf (101) eines Tool-Erfassungsskripts, das eine Mehrzahl von Überwachung-Tools integriert, regelmassig eine Vielzahl von voreingestellten Schlüsselindikatoren mittels einer Mehrzahl von voreingestellten, in dem Tool-Erfassungsskript eingeschlossenen, wesentlichen Tools kontrolliert, wobei jeder voreingestellte Schlüsselindikator in Realzeit durch die voreingestellten, wesentlichen Tools kontrolliert wird, die fähig sind anzuzeigen, ob der voreingestellte Schlüsselindikator anormale Information enthält;
wenn ein voreingestellter Zielschlüsselindikator anormal ist, Erfassung (102) von Betriebsparametern des Geräts durch eine Mehrzahl von Datenerfassungs-Tools, die dem voreingestellten Zielschlüsselindikator entsprechen und im Tool-Erfassungsskript enthalten sind, wobei für verschiedene voreingestellte Schlüsselindikatoren die Datenerfassungs-Tools bei anormalen Bedingungen voreingestellt werden und die mit den anormalen, voreingestellten Schlüsselindikatoren zusammenhängenden Betriebsparameter des Geräts basierend auf den Datenerfassungs-Tools gesammelt werden; und
Bestimmung und Rückführung (103) eines Fehlertyps, zu dem die Betriebsparameter des Geräts gehören, basierend auf den den voreingestellten Fehlertyps entsprechenden Parametermerkmalen.

2. Die Methode gemäss Anspruch 1, bei der:
Die Vielzahl von voreingestellten Schlüsselindikatoren mindestens eine CPU-Nutzungsrate, eine Speichernutzungsrate, einen Belastungswert, eine I/O-Wartedauer und eine CPU-Nutzung eines jeden Prozesses einschliesst.

3. Die Methode gemäss Anspruch 1, bei der, wenn der voreingestellte Zielschlüsselindikator anormal ist, die Erfassung der Betriebsparameter des Geräts über die Vielzahl der Datenerfassungs-Tools, die dem voreingestellten Zielschlüsselindikator entsprechen und die in dem Tool-Erfassungsskript eingeschlossen sind, Folgendes einschliesst:
Wenn mindestens ein voreingestellter Zielschlüsselindikator anormal ist, für mindestens einen aller voreingestellten Zielschlüsselindikatoren Konfiguration der Datenerfassungs-Threads der Vielzahl von Datenerfassungs-Tools, die dem voreingestellten Zielschlüsselindikator entsprechen und in dem Tool-Erfassungsskripts eingeschlossen sind;
Entfernung von duplizierten Datenerfassung-Threads aus allen Datenerfassungs-Threads;
Konfiguration von Daemon-Threads aller Datenerfassungs-Threads; und
Ablauf aller Datenerfassungs-Threads zwecks Erfassung von Betriebsparametern des Geräts.

4. Die Methode gemäss Anspruch 3, bei der der Ablauf der Datenerfassungs-Threads zwecks Erfassung der Betriebsparameter des Geräts Folgendes einschliesst:
Übereinstimmend mit den Synchronisierungsanforderungen eines jeden Datenerfassungs-Tools Teilung aller Dataerfassungs-Threads in synchrone Erfassungs-Threads und asynchrone Erfassungs-Threads;
simultaner Ablauf aller synchronen Erfassungs-Threads in einer Multi-Thread-Weise und Speichern der Betriebsparameter des Geräts in einer multi-threaded Speicherschlange mit Lese-Schreibesperren; und
nach Ablauf der synchronen Erfassungs-Thread-Enden, sequentieller Ablauf der asynchronen Erfassungs-Threads.

5. Die Methode gemäss Anspruch 1, bei der die Bestimmung und Rückführung des Fehlertyps, die auf die Betriebsparameter des Geräts zutreffen basierend auf den den voreingestellten Fehlertyps entsprechenden Parametermerkmalen, Folgendes einschliesst:
Wenn die Betriebsparameter des Geräts mit dem Zustand einer Vielzahl von voreingestellten Schlüsselindikatoren übereinstimmen, Bestimmung und Rückführung des Fehlertyps, die auf die Betriebsparameter des Geräts zutreffen, basierend auf den den voreingestellten Fehlertyps entsprechenden Parametermerkmalen.

6. Die Methode gemäss Anspruch 1, bei der die Bestimmung und Rückführung des Fehlertyps, die auf die Betriebsparameter des Geräts zutreffen, basierend auf den den voreingestellten Fehlertyps entsprechenden Parametermerkmalen, Folgendes einschliesst:
Bestimmung eines Parametertyps und der entsprechenden Parametermerkmalen, die für jeden Fehlertyp in einer vorgespeicherten Fehlertypbibliothek in einer Weise einzeln nacheinander gefordert werden;
Ordnen der Betriebsparameter des Geräts in dem Parametertyp und Verifizierung, ob die geordneten Betriebsparameter des Geräts mit den Parametermerkmalen übereinstimmen; und
wenn die Übereinstimmung nachgewiesen ist, Bestätigung und Rückführung eines aktuellen Fehlertyps, sonst Verifizierung des nächsten Fehlertyps.

7. Die Methode gemäss irgendeinem der Ansprüche 1-6, die weiter Folgendes einschliesst:
Empfang einer Konfigurationseinstellungsanweisung, die durch einen Anwender für das Tool-Erfassungs-Skript eingegeben wurde; und
Aktualisierung einer Skript-Ablaufskonfiguration des Tool-Erfassungs-Skripts übereinstimmend mit der Konfigurationseinstellungsanweisung, wobei die Skript-Ablaufskonfiguration mindestens einen von folgenden Konzepten einschliesst: einen Typ von Überwachungs-Tools und die entsprechenden Betriebsparameter, einen voreingestellten Schlüsselindikator und die entsprechenden voreingestellten, wesentlichen Tools und Datenerfassungs-Tools, sowie Parametereigenschaften und eine dem Fehlertyp entsprechende Rückführungsmethode.

8. Die Vorrichtung zur Überwachung des Gerätefehlers, die Folgendes umfasst:
Ein Überwachungsmodul (401), das konfiguriert ist, um ein Tool-Erfassungs-Skript zu laden und auszuführen, das eine Vielzahl von Überwachungs-Tools integriert und regelmässig eine Vielzahl von voreingestellten Schlüsselindikatoren durch eine Vielzahl von voreingestellten Basissoftwares überwacht, Basissoftwares die im Tool-Erfassungs-Skript eingeschlossen sind, wobei jeder voreingestellte Schlüsselindikator in Echtzeit durch die voreingestellten Basissoftwares überwacht wird, die fähig sind anzugeben, ob der voreingestellte Schlüsselindikator anormale Information enthält;
ein Erfassungsmodul (402), das konfiguriert ist, um, wenn ein voreingestellter Zielschlüsselindikator anormal ist, Betriebsparameter des Geräts über eine Vielzahl von Datenerfassungs-Tools zu erfassen, die dem voreingestellten Zielschlüsselindikaor entsprechen und im Tool-Erfassungs-Skript eingeschlossen sind, wobei für verschiedene voreingestellte Schlüsselindikatoren die Datenerfassungs-Tools in anormalem Zustand voreingestellt werden und die mit den voreingestellten anormalen Schlüsselindikatoren in Verbindung stehenden Betriebsparameter des Geräts basierend auf den Datenerfassungs-Tools erfasst werden; und
ein Bestimmungsmodul (403), das konfiguriert ist, um einen Fehlertyp zu bestimmen und rückzuführen, Fehlertyp, zu dem die Betriebsparameter des Geräts basierend auf Parametermerkmalen, die den voreingestellten Fehlertyps entsprechen, gehören.

9. Die Vorrichtung gemäss Anspruch 8, bei der:
Die Vielzahl von voreingestellten Schlüsselindikatoren mindestens eins oder mehrere von folgenden Elementen: eine CPU-Anwendungsrate, eine Speichernutzungsrate, einen Belastungswert, eine I/O-Wartedauer und eine CPU-Nutzung eines jeden Prozesses einschliesst.

10. Die Vorrichtung gemäss Anspruch 8, bei der das Erfassungsmodul benutzt wird, um:
Wenn mindestens ein voreingestellter Zielschlüsselindikator anormal ist, wird für mindestens jeden der voreingestellten Zielschlüsselindikatoren die Datenerfassungs-Threads der Vielzahl von Datenerfassungs-Tools konfiguriert, die dem voreingestellten Zielschlüsselindikator entsprechen und in dem Tool-Erfassungsskript eingeschlossen sind;
Entfernung von doppelten Datenerfassungs-Threads aus allen Datenerfassungs-Threads;
Konfiguration von Daemon-Threads aller Datenerfassungs-Threads; und Ablauf aller Datenerfassungs-Threads zwecks Erfassung der Betriebsparameter des Geräts.

11. Die Vorrichtung gemäss Anspruch 10, bei der das Erfassungsmodul für Folgendes benutzt wird:
Übereinstimmend mit den Synchronisierungsanforderungen eines jeden Datenerfassungs-Tools, Aufteilen aller Datenerfassungs-Threads in synchrone Erfassungs-Threads und asynchrone Erfassungs-Threads;
Simultaner Ablauf aller synchronen Erfassungs-Threads in einer Multi-Thread-Weise, und Speicherung der erfassten Betriebsparameter des Geräts in einer Multi-Thread-Speicherschlange mit Lese-Schreibsperren; und
nach Ablauf der synchronen Erfassungs-Thread-Enden, sequenzieller Ablauf der asynchronen Erfassungs-Threads.

12. Die Vorrichtung gemäss Anspruch 8, bei der das Bestimmungsmodul für Folgendes benutzt wird:
Wenn die Betriebsparameter des Geräts mit dem Zustand der Vielzahl von voreingestellten Schlüsselindikatoren übereinstimmt, Bestimmung und Rückführung des Fehlertyps, zu dem die Betriebsparameter des Geräts gehören, basierend auf den den voreingestellten Fehlertyps entsprechenden Parametermerkmalen.

13. Die Vorrichtung gemäss Anspruch 8, bei der das Bestimmungsmodul für Folgendes benutzt wird:
Bestimmung eines Parametertyps und der entsprechenden Parametermerkmale, die für jeden Fehlertyp in einer vorgespeicherten Fehlertypbibliothek gefordert sind, und zwar in einer Weise einzeln nacheinander;
Ordnen der Betriebsparameter des Geräts in dem Parametertyp und Verifizierung, ob die geordneten Betriebsparameter des Geräts mit den Parametermerkmalen übereinstimmen; und
wenn die Übereinstimmung nachgewiesen ist, Bestätigung und Rückführung eines aktuellen Fehlertyps, sonst Verifizierung des nächsten Fehlertyps.

14. Die Vorrichtung gemäss irgendeinem der Ansprüche 8-13, die weiter Folgendes einschliesst:
Ein Empfangsmodul (404), das konfiguriert ist, um eine Konfigurationseinstellungsanweisung, die durch einen Anwender für das Tool-Erfassungs-Skript eingegeben wurde, zu empfangen; und
ein Aktualisierungsmodul (405), das konfiguriert ist, um eine Skript-Ablaufskonfiguration des Tool-Erfassungs-Skripts übereinstimmend mit der Konfigurationseinstellungsanweisung zu aktualisieren, wobei die Skript-Ablaufskonfiguration mindestens eins von folgenden Konzepten einschliesst:
einen Typ von Überwachungs-Tools und die entsprechenden Betriebsparameter, einen voreingestellten Schlüsselindikator und die entsprechenden voreingestellten, wesentlichen Tools und Datenerfassungs-Tools, sowie Parametereigenschaften und eine dem Fehlertyp entsprechende Rückführungsmethode.

15. Eine Vorrichtung, die einen Prozessor (622) und einen Speicher (632) umfasst, Speicher, der mindestens eine Anweisung, mindestens ein Programmsegment, einen Kodesatz oder einen Anweisungssatz speichert, wobei die mindestens eine Anweisung, das mindestens eine Programmsegment, der Kodesatz oder der Anweisungssatz durch den Prozessor geladen und ausgeführt wird, um die Methode für die Überwachung von Gerätefehlern gemäs irgendeinem der Ansprüche 1-7 zu implementieren.

## Revendications

1. Une méthode pour le suivi des défaillances de un dispositif, comprenant les pas suivants:
télécharger et exécuter (101) un script de collecte d'outils, intégrant une série d'outils de suivi; faire le suivi régulièrement d'une série d'indicateurs clés prédéfinis au travers d'une série d'outils de base prédéfinis inclus dans le script de collecte d'outils, où chaque indicateur clé prédéfini est suivi en temps réel au travers des outils de base prédéfinis, capables d'indiquer si l'indicateur clé prédéfini contient une information anormale;
lorsqu'un indicateur clé prédéfini cible est anormal, collecter (102) les paramètres opérationnels du dispositif au travers d'une série d'outils de collecte de données qui correspondent à l'indicateur clé prédéfini cible, inclus dans le script de collecte d'outils, où, pour différents indicateurs clés prédéfinis, les outils de collecte de données sous les conditions anormales sont prédéfinis, et les paramètres opérationnels du dispositif, associés aux indicateurs clés prédéfinis anormaux sont collectés à partir de l'outil de collecte de données; et
déterminer et retourner les résultats (103) du type de défaillance auquel appartiennent les paramètres opérationnels du dispositif, sur la base des caractéristiques des paramètres correspondantes aux types de défaillance prédéfinis.

2. La méthode conformément à la revendication 1, où:
la série d'indicateurs clés prédéfinis comprennent au moins un ou plusieurs taux d'utilisation de la UCP, un taux d'utilisation de la mémoire, une valeur de charge, un temps d'attente entrée/sortie et l'utilisation de la UCP de chaque processus.

3. La méthode conformément à la revendication 1, où, lorsque l'indicateur clé prédéfini cible est anormal, la collecte des paramètres opérationnels du dispositif, au travers de la série d'outils de collecte correspondants à l'indicateur clé prédéfini cible inclus dans le script de collecte d'outils, comprend les pas suivants:
lorsqu'au moins un indicateur clé prédéfini cible est anormal, pour au moins chaque indicateur clé prédéfini cible, configurer des séquences de collecte de données de la série d'outils de collecte de données correspondants à l'indicateur clé prédéfini cible inclus dans le script de collecte d'outils;
supprimer les séquences de collecte de données dupliquées de toutes les séquences de collecte de données;
configurer des séquences à faible priorité de toutes les séquences de collecte de données; et
exécuter toutes les séquences de collecte de données pour collecter les paramètres opérationnels du dispositif.

4. La méthode conformément à la revendication 3, où l'exécution de toutes les séquences de collecte de données en vue de collecter les paramètres opérationnels du dispositif comprend les pas suivants:
conformément aux exigences de synchronisation de chaque outil de collecte de données, diviser toutes les séquences de collecte de données en séquences de collecte synchrones et séquences de collecte asynchrones;
exécuter simultanément toutes les séquences de collecte synchrones selon un mode multi-séquentiel, et stocker les paramètres opérationnels du dispositif collectés dans une queue de stockage multi-séquentiel avec verrouillage lecture/écriture; et
après avoir exécuté les extrémités des séquences de collecte synchrones, exécuter les séquences de collecte asynchrones de manière consécutive.

5. La méthode conformément à la revendication 1, où les opérations de déterminer et de retourner les résultats du type de défaillance auquel appartiennent les paramètres opérationnels du dispositif, sur la base des caractéristiques des paramètres correspondantes aux types de défaillance prédéfinis, comprend les pas suivants:
lorsque les paramètres opérationnels du dispositif s'apparient aux statuts de la série d'indicateurs clés prédéfinis, déterminer et retourner les résultats du type de défaillance auquel appartiennent les paramètres opérationnels du dispositif, sur la base des caractéristiques des paramètres correspondantes aux types de défaillance prédéfinis.

6. La méthode conformément à la revendication 1, où les opérations de déterminer et de retourner les résultats du type de défaillance auquel appartiennent les paramètres opérationnels du dispositif, sur la base des caractéristiques des paramètres correspondantes aux types de défaillance prédéfinis, comprennent les pas suivants:
déterminer un type de paramètre et les caractéristiques des paramètres correspondantes exigées pour chaque type de défaillance dans une bibliothèque de types de défaillances pré-stockés de manière individuelle;
disposer les paramètres opérationnels du dispositif dans le type de paramètre, et vérifier si les paramètres opérationnels du dispositif qui ont été disposés sont cohérents avec les caractéristiques des paramètres; et
une fois vérifiée la cohérence, confirmer et retourner les résultats du type de défaillance actuel, et, autrement, vérifier le type de défaillance suivant.

7. La méthode conformément à l'une quelconque des revendications 1-6, comprenant en outre les pas suivants:
recevoir une instruction d'ajustement de la configuration saisie par un utilisateur pour le script de collecte d'outils; et
mettre à jour une configuration d'exécution du script du script de collecte d'outils, conformément à l'instruction d'ajustement de la configuration, où la configuration d'exécution du script comprend au moins un ou plusieurs des éléments suivants: un type d'outils de suivi et les paramètres opérationnels correspondants, un indicateur clé prédéfini et les outils de base prédéfinis correspondants et les outils de collecte de données, et les caractéristiques des paramètres et une méthode de retour des résultats correspondante au type de défaillance.

8. Un appareil pour faire le suivi des défaillances du dispositif, comprenant les éléments suivants:
un module de suivi (401), configuré pour télécharger et exécuter un script de collecte d'outils qui intègre une série d'outils de suivi, et régulièrement faire le suivi d'une série d'indicateurs clés prédéfinis au travers d'une série d'outils de base prédéfinis inclus dans le script de collecte d'outils, où chaque indicateur clé prédéfini est suivi en temps réel au travers des outils de base prédéfinis capables de signaler si l'indicateur clé prédéfini contient une information anormale;
un module de collecte (402), configuré pour que, si un indicateur clé prédéfini cible est anormal, collecter les paramètres opérationnels du dispositif au travers d'une série d'outils de collecte de données qui correspondent à l'indicateur clé prédéfini cible inclus dans le script de collecte d'outils, où pour différents indicateurs clés prédéfinis, les outils de collecte de données sous des conditions anormales sont prédéfinis, et les paramètres opérationnels du dispositif associés aux indicateurs clés prédéfinis anormaux sont collectés sur la base de l'outil de collecte de données; et
un module de détermination (403), configuré pour déterminer et retourner les résultats du type de défaillance auquel les paramètres opérationnels du dispositif appartiennent, sur la base des caractéristiques des paramètres correspondantes aux types de défaillance prédéfinis.

9. L'appareil conformément à la revendication 8, où:
la série d'indicateurs clé prédéfinis comprennent au moins un ou plusieurs taux d'utilisation de la UCP, un taux d'utilisation de la mémoire, une valeur de charge, un temps d'attente entrée/sortie et l'utilisation de la UCP de chaque processus.

10. L'appareil conformément à la revendication 8, où le module de collecte est utilisé pour les opérations suivantes:
lorsqu'au moins un indicateur clé prédéfini cible est anormal, pour au moins chacun des indicateurs clés prédéfinis cibles, configurer les séquences de collecte de données de la série d'outils de collecte de données correspondants à l'indicateur clé prédéfini cible inclus dans le script de collecte d'outils;
supprimer les séquences de collecte de données dupliquées de toutes les séquences de collecte de données;
configurer des séquences à faible priorité de toutes les séquences de collecte de données; et
exécuter toutes les séquences de collecte de données pour collecter les paramètres opérationnels du dispositif.

11. L'appareil conformément à la revendication 10, où le module de collecte est utilisé pour les opérations suivantes:
conformément aux exigences de synchronisation de chaque outil de collecte de données, diviser les séquences de collecte de données en séquences de collecte synchrones et séquences de collecte asynchrones;
exécuter simultanément toutes les séquences de collecte synchrones selon un mode multi-séquentiel, et stocker les paramètres opérationnels du dispositif collectés dans une queue de stockage multi-séquentiel avec verrouillage lecture/écriture; et
après avoir exécuté les extrémités des séquences de collecte synchrones, exécuter les séquences de collecte asynchrones de manière consécutive.

12. L'appareil conformément à la revendication 8, où le module de détermination est utilisé pour les opérations suivantes:
lorsque les paramètres opérationnels du dispositif s'apparient aux statuts de la série d'indicateurs clés prédéfinis, déterminer et retourner les résultats du type de défaillance auquel appartiennent les paramètres opérationnels du dispositif, sur la base des caractéristiques des paramètres correspondantes aux types de défaillance prédéfinis.

13. L'appareil conformément à la revendication 8, où le module de détermination est utilisé pour les opérations suivantes:
déterminer un type de paramètre et les caractéristiques des paramètres correspondantes exigées pour chaque type de défaillance dans une bibliothèque de types de défaillances pré-stockés de manière individuelle;
disposer les paramètres opérationnels du dispositif dans le type de paramètre, et vérifier si les paramètres opérationnels du dispositif qui ont été disposés sont cohérents avec les caractéristiques des paramètres; et
une fois vérifiée la cohérence, confirmer et retourner les résultats du type de défaillance actuel, et, autrement, vérifier le type de défaillance suivant.

14. L'appareil conformément à l'une quelconque des revendications 8-13, comprenant en outre les éléments suivants:
un module de réception (404), configuré pour recevoir une instruction d'ajustement des configurations saisie par un utilisateur pour le script de collecte d'outils; et
un module de mise à jour (405), configuré pour mettre à jour une configuration d'exécution du script du script de collecte d'outils, conformément à l'instruction d'ajustement de la configuration, où la configuration d'exécution du script comprend au moins un ou plusieurs des éléments suivants : un type d'outils de suivi et les paramètres opérationnels correspondants, un indicateur clé prédéfini et les outils de base prédéfinis correspondants et les outils de collecte de données, et les caractéristiques des paramètres et une méthode de retour des résultats du type de défaillance.

15. Un dispositif comprenant un processeur (622) et une mémoire (632), la mémoire stockant au moins une instruction, au moins un segment de programme, une série de codes, ou une série d'instructions, où au moins une instruction, au moins un segment de programme, la série de codes ou la série d'instructions sont téléchargés et exécutés par le processeur pour mettre en place la méthode de suivi des défaillances du dispositif, conformément à l'une quelconque des revendications 1 à 7.
